# FASCICULE DE BREVET EUROPEEN

(11) **EP 3 157 801 B1**
(45) Date de publication et mention de la délivrance du brevet: **11.07.2018**
(21) Numéro de dépôt: 15728564.4
(22) Date de dépôt: 16.06.2015
(51) Int. Cl.: F15B 13/04, F15B 13/02, F15B 13/044, G05D 16/20

(54) **DISPOSITIF DE COMMANDE DE L'ECOULEMENT D'UN FLUIDE A DETECTION DE SEUIL DE PRESSION INTEGREE**
VORRICHTUNG ZUR STEUERUNG DES FLUSSES EINER FLÜSSIGKEIT MIT INTEGRIERTER DRUCKSCHWELLWERTDETEKTION
DEVICE FOR CONTROLLING THE FLOW OF A FLUID WITH IN-BUILT PRESSURE THRESHOLD DETECTION

(30) Priorité: 17.06.2014 FR 1455526
(43) Date de publication de la demande: 26.04.2017
(73) Titulaire: Bontaz Centre R&D, 74460 Marnaz (FR)
(72) Inventeur: TAUPEAU, Anthony, Raymond, Arthur, 74330 Poisy (FR); PEROTTO, Stéphane, Pascal, 74130 Ayze (FR); GOISQUE, Boris, Marie, Frédéric, 74000 Annecy (FR)
(74) Mandataire: Brevalex
(86) Numéro de dépôt international: PCT/EP2015/063424
(87) Numéro de publication internationale: WO 2015/193283

(56) Documents cités:
- US-A- 5 460 198
- US-A- 5 580 817
- US-A- 5 857 478
- US-B1- 6 328 535

## Description

### DOMAINE TECHNIQUE ET ÉTAT DE LA TECHNIQUE ANTÉRIEURE

La présente invention se rapporte à un dispositif de commande d'écoulement d'un fluide, notamment à un clapet ou à une électrovanne, à détection de seuil intégrée, par exemple mis en oeuvre dans un véhicule automobile

Des clapets sont mis en oeuvre dans des circuits hydrauliques afin de commander l'écoulement d'un fluide. Les clapets s'ouvrent lorsque la pression du fluide dépasse une valeur donnée, leur fonctionnement est uniquement mécanique.

Des électrovannes peuvent également être mises en oeuvre, celles-ci comportent un solénoïde qui, lorsqu'il est alimenté en courant, permet à l'obturateur de s'écarter de son siège, permettant l'écoulement du fluide à travers l'électrovanne.

Les circuits hydrauliques sont également équipés de un ou plusieurs dispositifs permettant la détection d'un seuil de pression. Ces dispositifs sont par exemple appelés manostats ou manocontacts, le dépassement du seuil de pression est détecté par l'ouverture d'un circuit électrique.

Les moteurs à combustion interne sont souvent équipés de un ou plusieurs de ces manocontacts afin de recueillir via une information électrique l'état de pression du circuit hydraulique.

Or, en particulier dans le domaine automobile, il est souhaitable de réduire l'encombrement des différents composants, de réduire le nombre de ces composants et de simplifier leur montage, notamment pour des raisons de coûts de revient, d'encombrement et de poids.

Le document US 5 460 198
décrit une vanne hydraulique typique pour les véhicules.

### EXPOSÉ DE L'INVENTION

C'est par conséquent un but de la présente invention d'offrir un dispositif permettant à la fois de commander l'écoulement d'un fluide et de détecter un seuil de pression.

L'objectif énoncé ci-dessus est atteint par un dispositif de commande de l'écoulement d'un fluide dans un conduit, comportant un corps, un obturateur coopérant avec un siège d'obturateur, le corps étant formé d'un élément externe et d'un élément interne, l'élément interne étant apte à coulisser dans l'élément externe et portant le siège d'obturateur. L'élément interne est conducteur électrique et l'élément externe est isolant électrique. L'élément interne est apte à se déplacer par rapport à l'élément externe, sous l'effet de la pression du fluide de telle sorte que, pour une pression inférieure au seuil de pression à détecter, il ferme ou ouvre un circuit électrique et de sorte que pour une pression de fluide supérieure ou égale au seuil donné, il ouvre ou ferme le circuit électrique respectivement, le circuit électrique étant en partie formé par au moins l'élément interne et une zone du bâti dans lequel le conduit est formé.

En d'autres termes, on intègre directement dans le corps du dispositif le moyen de détection de seuil de pression.

L'encombrement est donc réduit, le montage est simplifié puisqu'il n'y a plus qu'un composant à monter au lieu de deux.

Le dispositif de commande de l'écoulement du fluide peut être un clapet ou une électrovanne.

Le dispositif peut être mis en oeuvre dans un circuit hydraulique d'un véhicule automobile, le bâti étant alors formé par le bloc moteur qui est relié à la masse électrique du véhicule.

La présente invention a alors pour objet un dispositif de commande de l'écoulement d'un fluide à détection de seuil de pression intégré comportant des moyens interrompant et autorisant l'écoulement destinés à être disposés dans un conduit d'un bâti reliant une source de fluide et un zone à alimenter en fluide, ledit bâti comportant au moins une zone conductrice électrique, des moyens interrompant et autorisant l'écoulement comportant un corps portant un premier siège d'obturateur, un obturateur destiné à coopérer de manière étanche avec le siège d'obturateur, un premier moyen élastique de rappel appliquant un effort de rappel sur l'obturateur en direction du premier siège d'obturateur, ledit corps comportant un élément interne portant le siège d'obturateur, ledit élément interne étant conducteur électrique, ledit corps comportant également un élément externe en au moins en partie isolant électrique de sorte à être isolé électriquement d'au moins la zone conductrice du bâti, le dispositif comportant également une connexion électrique destinée à être reliée à un système de détection, ledit système de détection formant avec au moins la zone conductrice du bâti et l'élément interne un circuit électrique de détection, l'élément interne étant en contact permanent avec la connexion électrique, l'élément intérieur étant apte à coulisser de manière sensiblement étanche dans l'élément externe de sorte que, lorsque la pression du fluide dépasse la pression seuil, le circuit électrique passe d'un état fermé à un état ouvert ou lorsque la pression du fluide dépasse la pression seuil le circuit électrique passe d'un état ouvert à un état fermé.

Dans un exemple de réalisation, dans un premier état de fonctionnement pour une pression inférieure à la pression seuil, l'élément intérieur est en contact électrique avec la zone conductrice du bâti et le circuit électrique est fermé et dans un deuxième état de fonctionnement pour une pression supérieure ou égale à la pression seuil, l'élément intérieur n'est pas en contact électrique avec la zone conductrice du bâti et le circuit électrique est ouvert.

Selon une caractéristique additionnelle, le dispositif de commande peut comporter un deuxième moyen de rappel élastique de l'élément interne en direction de la zone conductrice du bâti, ledit deuxième moyen de rappel élastique étant conducteur électrique et formant une partie du circuit électrique de détection.

Selon une autre caractéristique additionnelle, le dispositif de commande peut comporter un évent et l'élément interne peut comporter un deuxième siège d'obturateur de sorte que, lorsque les moyens interrompant et autorisant l'écoulement autorisent l'écoulement, l'obturateur est en appui sur le deuxième siège d'obturateur et la communication entre la zone à alimenter et l'évent est interrompue.

Selon une autre caractéristique additionnelle, le dispositif de commande comporte une butée portée par l'élément externe, telle qu'elle limite le coulissement de l'élément interne sous l'effet du fluide sous pression.

Avantageusement, le dispositif de commande comporte une pièce de connexion intermédiaire conductrice électrique avec lequel l'élément interne est destiné à être en contact électrique et mécanique dans le premier état de fonctionnement, et à ne pas être en contact électrique et mécanique dans le deuxième état de fonctionnement, la pièce de connexion intermédiaire étant destinée à être en contact mécanique et électrique permanent avec au moins la zone conductrice du bâti.

De préférence, la pièce intermédiaire de connexion comporte une zone conductrice électrique déformable élastiquement destinée à être en contact électrique permanent avec la zone conductrice électrique du bâti, assurant un rattrapage des jeux et un contact électrique permanent avec le bâti.

Dans un mode de réalisation, les moyens interrompant et autorisant l'écoulement sont formés par un clapet, ledit clapet s'ouvrant lorsque la pression du fluide est au moins égale à une pression d'alimentation supérieure à la pression seuil.

Dans un autre mode de réalisation, les moyens interrompant et autorisant l'écoulement sont formés par une électrovanne. L'électrovanne peut comporter un solénoïde et une boucle conductrice et magnétique, ladite boucle formant une partie du circuit électrique de détection.

Le dispositif de commande peut comporter une connexion électrique d'alimentation électrique du solénoïde, ladite connexion électrique étant avantageusement adjacente à la connexion électrique du circuit de détection.

La présente invention a également pour objet un système hydraulique comportant un bâti dans lequel est réalisé un circuit hydraulique, au moins un dispositif de commande selon l'invention monté dans le circuit hydraulique, et un système de détection d'un seuil de pression dans le circuit hydraulique, ledit système de détection comportant une alimentation électrique, ladite connexion électrique du dispositif de commande étant reliée au système de détection relié à la zone conductrice du bâti de sorte à former le circuit électrique de détection.

Le bâti peut être en matériau conducteur électrique.

La présente invention a également pour objet un véhicule automobile comportant un bloc-moteur et au moins un système selon l'invention, le bloc moteur formant le bâti. Le bloc moteur est avantageusement relié à la masse électrique du véhicule automobile.

### BRÈVE DESCRIPTION DES DESSINS

La présente invention sera mieux comprise sur la base de la description qui va suivre et des dessins en annexe sur lesquels:
- la figure 1 est une vue en coupe longitudinale d'un premier mode de réalisation d'un dispositif de commande selon l'invention comportant un clapet à bille dans un état où la pression est inférieure au seuil de pression à détecter,
- la figure 2 est une vue en coupe longitudinale du dispositif de la figure 1 dans un état où la pression est supérieure ou égale au seuil de pression à détecter,
- la figure 3 est une vue en coupe longitudinale d'un deuxième exemple d'un dispositif de commande de pression selon l'invention comportant une électrovanne dans un état où la pression est inférieure au seuil de pression à détecter, l'électrovanne étant fermée,
- la figure 4 est une vue en coupe longitudinale du dispositif de la figure 3 dans un état où la pression est supérieure ou égale au seuil de pression à détecter, l'électrovanne étant fermée,
- la figure 5 est une vue en coupe longitudinale du dispositif de la figure 3 dans un étant où la pression est supérieure ou égale au seuil de pression à détecter, l'électrovanne étant ouverte,
- la figure 6 est une vue longitudinale représenté de manière schématique d'une variante de réalisation du premier mode de réalisation d'un dispositif de commande selon l'invention comportant un clapet à bille dans un état où la pression est inférieure au seuil de pression à détecter,
- la figure 7 est une vue longitudinale représenté de manière schématique d'une autre variante de réalisation du premier mode de réalisation d'un dispositif de commande selon l'invention comportant un clapet à piston dans un état où la pression est inférieure au seuil de pression à détecter,
- la figure 8 est une vue longitudinale d'une variante de réalisation du deuxième mode de réalisation d'un dispositif de commande selon l'invention dans un état où la pression est inférieure au seuil de pression à détecter.

### EXPOSÉ DÉTAILLÉ DE MODES DE RÉALISATION PARTICULIERS

L'invention va être décrite dans une application à un véhicule automobile, mais celle-ci s'applique à tous les domaines comportant un circuit hydraulique dans lequel on souhaite commander l'écoulement d'un fluide et connaître sa pression par rapport à un seuil.

L'amont et l'aval sont à considérer de la gauche vers la droite dans la représentation des dessins. Les éléments et pièces ayant des fonctions et formes identiques ou similaires seront désignés par la même référence.

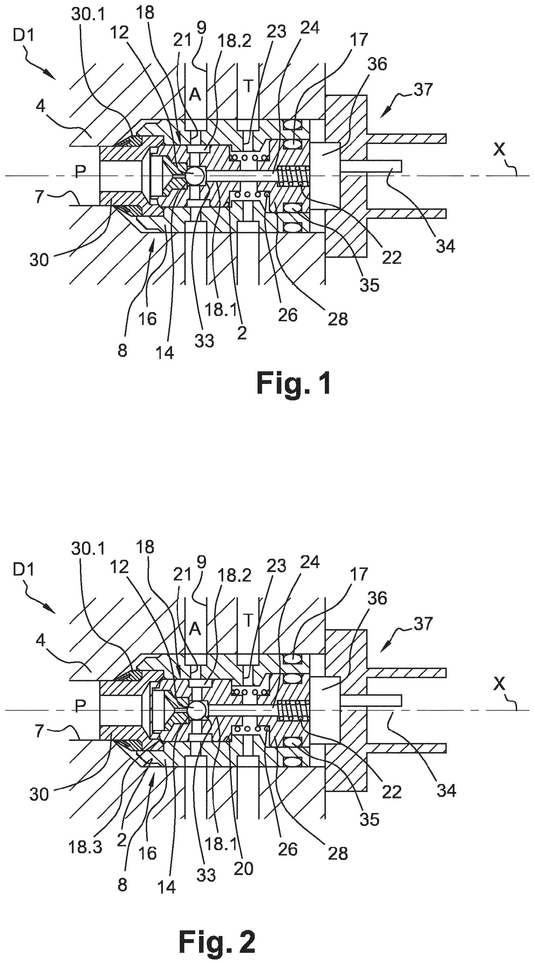

Sur les figures 1 et 2, on peut voir un premier mode de réalisation d'un dispositif D1 selon l'invention monté dans un piquage 2 formé dans un bloc moteur 4. Le dispositif D1 est destiné à commander l'écoulement d'un fluide entre une source de fluide désignée P et une zone à alimenter désignée A. Le dispositif D1 comporte un clapet 8 disposé entre la source P et la zone A; le clapet est destiné à empêcher l'écoulement du fluide entre la source P et la zone A tant que la pression est inférieure à une pression d'ouverture donnée et à autoriser l'écoulement lorsque cette pression est supérieure ou égale à la pression d'ouverture. Dans l'exemple représenté, le piquage 2 est relié à la source P par un conduit 7 et à la zone A par un conduit 9. Le dispositif est partiellement monté dans le piquage 2.

Le clapet présente dans l'exemple représenté une forme sensiblement cylindrique de révolution autour d'un axe longitudinal X.

Le clapet 8 comporte un corps 10 monté dans le piquage 2, un obturateur 12 et un siège d'obturateur 4 avec lequel coopère l'obturateur 12 de sorte à interrompre ou à permettre l'écoulement à travers le clapet 8.

Le corps comporte un élément externe 16 et un élément interne 18.

L'élément externe 16 comporte un canal longitudinal 20 s'étendant sur toute sa longueur. L'élément externe 16 est monté fixe dans le piquage 2 et l'élément interne 18 est monté apte à coulisser dans le canal longitudinal 20.

L'élément externe 16 est ajusté dans le piquage de sorte à assurer un montage sensiblement étanche en l'absence de joint d'étanchéité entre le conduit 7 et le conduit 9; des fuites peuvent apparaître mais celles-ci sont négligeables. En variante, des moyens d'étanchéité pourraient être mis en oeuvre.

De préférence et comme cela est représenté, l'élément externe 16 comporte à une extrémité longitudinale aval un joint d'étanchéité 17, par exemple un joint torique, sur sa surface latérale externe de sorte à assurer un montage étanche du dispositif dans le bloc-moteur et éviter toute fuite vers l'extérieur du bloc-moteur.

L'élément interne 18 est également ajusté dans le canal 20 de l'élément externe 16 de sorte à assurer un coulissement sensiblement étanche en l'absence de joint d'étanchéité; des fuites peuvent apparaître mais celles-ci sont négligeables. En variante, des moyens d'étanchéité, tels que des joints toriques, dans chaque voie pourraient être mis en oeuvre.

Le siège d'obturateur 14 est porté par l'élément interne 18.

L'élément externe 16 comporte au moins un ou plusieurs premiers piquages radiaux 21 situés en aval du siège d'obturateur 14 et mettant en communication la portion du canal 20 en aval du siège de clapet 14 et la zone A.

De manière avantageuse, l'élément externe 16 comporte un ou plusieurs deuxièmes piquages radiaux 23 réalisés en aval de l'élément interne 18 vers un évent T.

L'élément interne 18 comporte également un canal longitudinal 18.1 et un ou plusieurs piquages radiaux 18.2 pour mettre en communication le canal 18.1 et le premier piquage 21 de l'élément externe 16.

Dans l'exemple représenté, l'obturateur 12 est formé par une bille. Un premier moyen de rappel élastique 22, par exemple un ressort hélicoïdal, en direction du siège de clapet 14 est monté en réaction entre une tige 24 en appui sur la bille 12 et une partie fixe du clapet. La charge du premier moyen élastique 22 est choisie pour que la bille 24 se décolle du siège d'obturateur 14 pour une pression de fluide supérieure ou égale à une pression d'ouverture donnée. En variante, la tige 24 pourrait être omise, la bille reposant alors directement sur le ressort 22.

L'élément interne 18 est apte à être déplacé dans le canal 20 sous l'effet de la pression du fluide s'appliquant sur sa face amont 18.3.

Le dispositif comporte également un deuxième moyen de rappel élastique 26, par exemple un ressort hélicoïdal, monté en réaction entre l'élément interne 18 et une pièce aval 28 fixe du dispositif.

La charge du deuxième moyen élastique 26 est choisie pour permettre à l'élément interne 18 de coulisser vers l'aval pour une pression de fluide s'exerçant sur sa face amont 18.3 supérieure ou égale à une pression seuil que l'on souhaite détecter.

La pression seuil à détecter est inférieure à la pression d'ouverture du clapet.

L'élément interne 18 est conducteur électrique et l'élément externe 16 est isolant électrique de sorte à ne pas mettre en contact électrique l'élément interne et le bloc-moteur, et plus généralement la zone conductrice du bâti dans lequel le circuit est réalisé.

Dans l'exemple représenté, l'élément interne 18 est entièrement en matériau conducteur électrique, par exemple en acier, en aluminium, en or, en argent... et l'élément externe 16 est entièrement en matériau isolant électrique, par exemple en plastique, aluminium anodisé.

En variante, on peut envisager que l'élément externe soit en matériau conducteur électrique mais isolé électriquement du bloc moteur, par exemple par une enveloppe en matériau isolant électrique. Il pourrait par exemple être réalisé en aluminium anodisé. L'élément interne 18 pourrait comporter une zone conductrice électrique dans un matériau isolant électrique.

Le bloc-moteur est également réalisé en un matériau conducteur électrique par exemple en acier ou aluminium.

Dans l'exemple représenté, une pièce de connexion intermédiaire 30 en forme d'embout de connexion est avantageusement montée dans une extrémité amont de l'élément externe 16 en amont de l'élément interne 18 et en contact permanent avec le bloc-moteur. L'embout de connexion 30 comporte un canal 32 permettant l'écoulement du fluide de la source P jusqu'à la face amont 18.3 de l'élément interne 18. L'embout de connexion 30 est en matériau conducteur électrique et est connecté électriquement au bloc-moteur de manière avantageuse par l'intermédiaire d'un élément de contact électrique 30.1 annulaire de type à lamelle. L'embout 30 est par exemple en acier, en aluminium, en inox...

L'élément interne 18 est apte à coulisser dans l'élément externe 16 entre une première position dans laquelle il est en contact mécanique et électrique par sa face amont 18.3 avec l'embout de connexion 30 et une deuxième position dans laquelle la face amont 18.3 de l'élément interne 18 est à distance de l'embout de connexion 30, le contact électrique étant alors rompu.

Dans l'exemple représenté, l'élément interne 16 prend la première position lorsque la pression de fluide est inférieure au seuil à détecter et prend la deuxième position lorsque la pression de fluide est supérieure ou égale au seuil à détecter.

L'embout de connexion permet avantageusement de garantir le contact électrique permanent avec le bloc moteur. En effet, selon la chaine de cote des composants et les vibrations du moteur, cet embout permet de rattraper les jeux afin de garantir le contact électrique en permanence grâce à la fonction ressort remplie par le contact à lamelle.

L'élément externe 16 comporte avantageusement une butée axiale limitant le coulissement de l'élément interne 18 vers l'aval, la butée axiale est par exemple formée par un épaulement 31 réalisé dans la surface intérieure du canal 20 entre le premier piquage 21 et le deuxième piquage 23.

L'élément interne 18 comporte un deuxième siège d'obturateur 33 en aval du premier siège d'obturateur 14 de sorte que la bille 12 vienne en appui contre le deuxième siège d'obturateur 33 et stoppe l'écoulement à travers l'élément interne 18 entre le premier piquage 21 et le deuxième piquage 23 de l'élément externe.

La pièce aval 28 obture de manière étanche une extrémité aval du canal 20. Par exemple, un joint torique 35 est monté entre la surface latérale extérieure de la pièce aval 28 et la surface intérieure du canal 20. Dans l'exemple représenté, la tige 24 en appui sur la bille 14 est montée coulissante dans un alésage 32 de la pièce aval 24 assurant un guidage axial de la tige 24.

Le dispositif comporte également à son extrémité aval à l'extérieur du corps une cosse électrique de détection 34 en contact électrique permanent avec l'élément interne 18 et destinée à être reliée à un système de détection. Le dispositif comporte également un connecteur électrique 37 entourant la cosse 34 et assurant l'assemblage mécanique à une cosse électrique du système de détection. Le connecteur électrique assure également l'assemblage mécanique du dispositif avec le bloc moteur via des vis rapportées par exemple.

Le connecteur électrique est de préférence en matériau isolant électrique afin de ne pas perturber la conduction électrique à l'intérieur du dispositif puisqu'il est à la fois en contact avec la cosse 34 et le bloc moteur. En variante, il pourrait être en matériau conducteur et isolé électriquement de la cosse et/ou du bloc moteur.

Dans l'exemple représenté, l'élément interne 16 est relié électriquement à la cosse 34 par l'intermédiaire du deuxième moyen de rappel 26 qui est conducteur électrique, de la pièce aval 28 qui est conductrice électrique et d'un contact électrique 36 interposé entre la pièce aval et la cosse 34 et assurant une continuité électrique.

En variante, la pièce aval 28 pourrait être omise et l'élément interne 18 serait relié électriquement au contact 36 directement par le deuxième moyen de rappel élastique.

Selon encore une autre variante, le deuxième moyen de rappel élastique 26 pourrait être isolant électrique et un conducteur souple, par exemple de type filaire qui ne s'opposerait pas au coulissement de l'élément interne, pourrait connecter l'élément interne et la pièce aval 28 ou l'élément interne 18 et le contact 36 directement.

Le système de détection comporte au moins le bloc moteur et une source d'alimentation électrique, et forme avec l'élément interne un circuit électrique de détection.

Dans le cas d'un véhicule automobile, le bloc-moteur est avantageusement relié à la masse électrique du véhicule ainsi que la source d'alimentation électrique qui peut être la batterie du véhicule automobile.

Le fonctionnement du dispositif de commande D1 avec détection de seuil de pression intégré va maintenant être décrit.

Lorsque la pression du fluide provenant de la source P est inférieure à la pression seuil à détecter et donc inférieure à la pression d'ouverture du clapet, l'élément interne 18 est maintenu, sous l'effet de la charge du deuxième moyen élastique 26, dans sa première position représentée sur la figure 1 en contact mécanique et électrique avec l'embout de connexion 30 par sa face amont 18.3. L'embout de connexion 30 étant en permanence en contact électrique avec le bloc-moteur relié à la masse électrique et l'élément interne 18 étant en permanence en contact électrique avec la cosse 34 reliée au système de détection, le circuit électrique de détection est fermé. Le courant circule. Le système de détection détecte que la pression du fluide est inférieure à la pression seuil. Un voyant lumineux peut par exemple être allumé, celui-ci étant monté par exemple en série dans le circuit de détection. Tout autre dispositif d'alarme peut être mis en oeuvre.

Lorsque la pression du fluide est supérieure ou égale à la pression seuil, cette pression s'exerçant sur la face amont 18.3 de l'élément interne 18, celui-ci est déplacé vers l'aval à l'encontre du deuxième moyen élastique 26, et s'écarte de l'embout de connexion 30. Le contact mécanique et électrique entre l'embout de connexion 30 et l'élément interne 18 est alors rompu. Le fluide situé en aval de l'élément interne 18 est évacué par l'évent et ne s'oppose pas au déplacement de l'élément interne.

L'élément interne vient en butée contre l'épaulement de l'élément externe. La bille en appui sur le siège de clapet se déplace avec l'élément interne, le clapet reste fermé.

Le circuit de détection est ouvert. Le système de détection détecte l'ouverture du circuit et en déduit que la pression du fluide est égale ou supérieure à la pression seuil. Le voyant lumineux s'éteint.

Lorsque la pression du fluide repasse en dessous de la pression seuil, l'élément interne 18 est repoussé vers l'embout de connexion 30 et entre à nouveau en contact avec celui-ci sous l'effet de la charge du deuxième moyen de rappel 26.

Lorsque la pression du fluide dépasse la pression d'ouverture, puisque l'élément interne 18 est en butée contre l'épaulement 28, il ne se déplace plus vers l'aval, la bille 12 peut se décoller du siège d'obturateur 14 et vient en appui sur le deuxième siège d'obturateur 33, permettant d'une part l'écoulement entre la source P et la zone à alimenter A et interrompant la communication entre la zone A et l'évent.

La présente invention permet de ne pas perturber le fonctionnement du clapet.

Le dispositif selon l'invention assure à la fois une fonction de clapet et une fonction de détection de seuil de pression tout en offrant une grande compacité et un fonctionnement fiable.

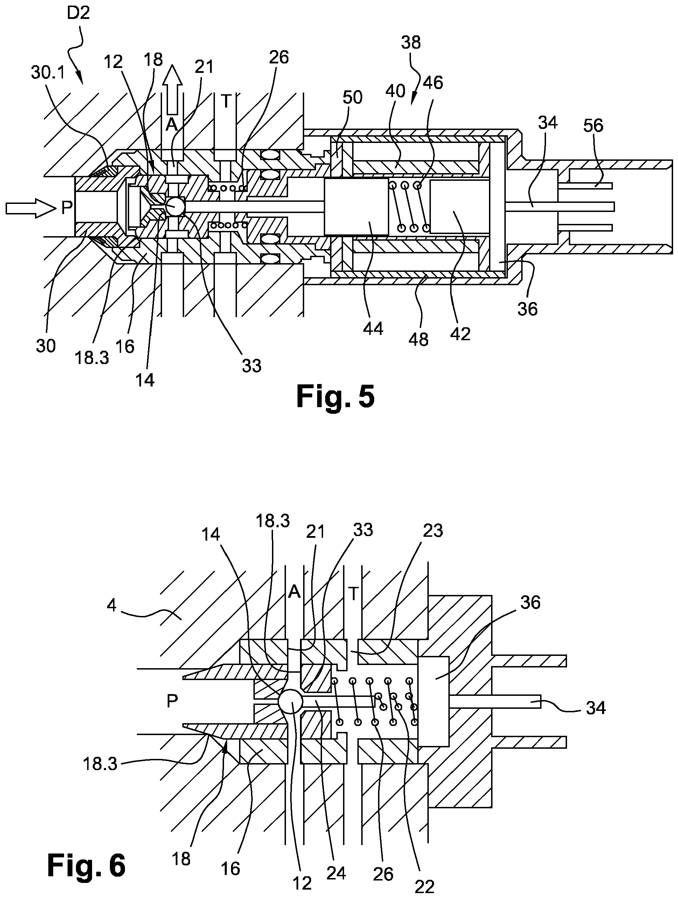

En variante, on pourrait envisager de ne pas mettre en oeuvre l'embout de connexion 30 et d'avoir un contact mécanique et électrique direct entre l'élément interne et le bloc-moteur. Une telle variante est représentée sur la figure 6.

Néanmoins l'embout de connexion permet avantageusement d'éviter la détérioration du bloc-moteur, en évitant un contact mécanique direct entre le bloc-moteur et l'élément interne. En effet, l'élément interne est destiné à entrer en contact électrique de manière répétée avec le bloc-moteur sous l'effet du deuxième moyen de rappel 26. Ces contacts répétés pourraient endommager le bloc moteur.

Les matériaux de l'embout de connexion et de l'élément interne sont donc réalisés dans des matériaux évitant de tels dommages lors de leurs contacts. Ils sont par exemple réalisés dans le même matériau.

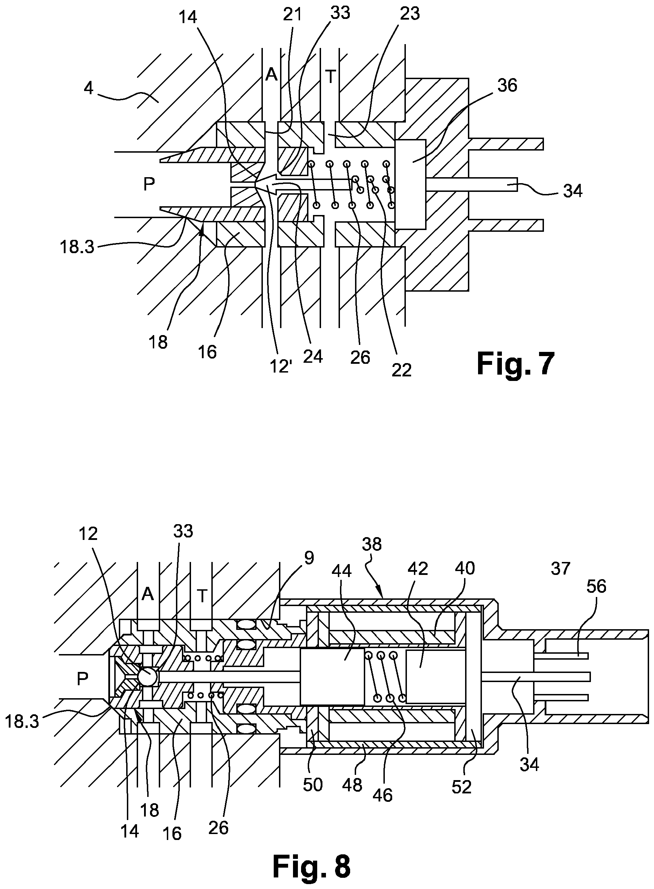

Sur la figure 7, on peut voir une variante du dispositif de la figure 6 dans laquelle l'obturateur 12 est formé par un piston 12'. Ceci s'applique également au dispositif des figures 1 et 2.

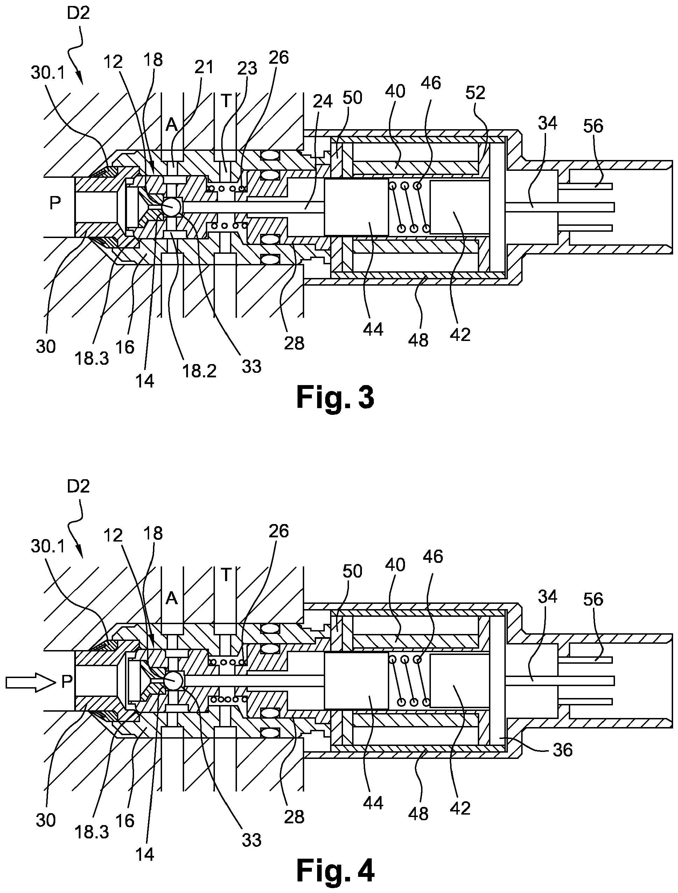

Un deuxième exemple de réalisation va maintenant être décrit en relation avec les figures 3 à 5.

Le deuxième mode de réalisation diffère du premier mode de réalisation principalement par le fait qu'il s'agit d'une électrovanne et non d'un clapet, i.e. que l'écoulement est commandé par un signal électrique et non par le niveau de pression du fluide provenant de la source.

Le dispositif de commande D2 comporte en aval de l'élément interne 18 les moyens de commande 38 de l'électrovanne.

Les moyens de commande 38 sont situés à l'extérieur du bloc-moteur.

Dans l'exemple représenté, les moyens de commande 38 comportent un solénoïde 40 d'axe X, un noyau fixe 42 et un noyau mobile 44 disposés à l'intérieur du solénoïde, un moyen de rappel 46, par exemple un ressort de rappel en réaction entre le noyau fixe 42 et le noyau mobile 44. Le noyau mobile est solidaire en coulissement d'une extrémité aval de la tige 24. Les moyens de commande comportent également un enveloppe 48 entourant radialement le solénoïde 40, un flasque amont 50 et le contact 36 en contact électrique avec l'enveloppe 48. L'enveloppe 48, le flasque amont 50 et le contact 36 forment une boucle magnétique et conductrice de l'électrovanne. Le déplacement du noyau mobile 44 vers l'aval permet le décollement de la bille 12 de son premier siège d'obturateur 14.

Dans l'exemple représenté, la pièce aval 28 présente un évidement dans lequel est apte coulisser le noyau mobile 44.

Une cosse électrique 56 de l'électrovanne est prévue à l'extérieur du dispositif pour permettre l'alimentation électrique du solénoïde 40. Elle est avantageusement disposée de manière adjacente à la cosse de détection 34 dans le connecteur 37, permettant ainsi une connexion simultanée de la cosse de détection 34 et de la cosse 56 de l'électrovanne au système électrique.

L'élément interne 18 est relié électriquement en permanence à la cosse de détection 34 par le deuxième moyen de rappel 26, la pièce aval 28, le flasque amont 50, l'enveloppe 48 et le contact 36. Le nombre de composants mis en oeuvre est réduit puisqu'on utilise les éléments ayant déjà une autre fonction.

En variante, comme pour le premier mode de réalisation, une connexion électrique filaire pourrait être réalisée sur tout ou partie du chemin électrique entre l'élément interne 18 et la cosse de détection 34.

Dans l'exemple représenté, l'électrovanne est du type trois voies, deux positions. L'électrovanne peut être du type proportionnel ou du type « tout ou rien » (On/Off).

Le fonctionne du dispositif D2 va maintenant être décrit.

Tout d'abord on considère le cas où l'électrovanne est fermée, i.e. la bille 12 est en appui sur le premier siège d'obturateur 14. Lorsque la pression du fluide provenant de la source P est inférieure à la pression seuil à détecter, l'élément interne 18 est maintenu, sous l'effet de la charge du deuxième moyen élastique 26, dans sa première position représentée sur la figure 3 en contact mécanique et électrique avec l'embout de connexion 30 par son extrémité amont. L'embout de connexion 30 étant en permanence en contact électrique avec le bloc-moteur relié à la masse électrique et l'élément interne 18 étant en permanence en contact électrique avec la cosse 34 reliée au système de détection, le circuit électrique de détection est fermé. Le courant circule. Le système de détection détecte que la pression du fluide est inférieure à la pression seuil. Un voyant lumineux peut par exemple être allumé, celui-ci étant monté par exemple en série dans le circuit de détection.

Lorsque la pression du fluide est supérieure ou égale à la pression seuil, cette pression s'exerçant sur la face amont 18.3 de l'élément interne 18, celui-ci est déplacé à l'encontre du deuxième moyen élastique 26, et s'écarte de l'embout de connexion 30, le contact mécanique et électrique entre l'embout de connexion 30 et l'élément interne est rompu. Le fluide situé en aval de l'élément interne 18 est évacué par l'évent et ne s'oppose pas au déplacement de l'élément interne 18. Le moyen de rappel 46 est également comprimé.

L'élément interne 18 vient en butée contre l'épaulement de l'élément externe. La bille 12 en appui sur le premier siège d'obturateur 14 se déplace avec l'élément interne 18, la communication entre la source P et la zone A est toujours interrompue. Le circuit de détection est ouvert. Le système de détection détecte l'ouverture du circuit et en déduit que la pression du fluide est égale ou supérieure à la pression seuil. Le voyant lumineux s'éteint (figure 4).

Lorsque la pression du fluide repasse en dessous de la pression seuil, l'élément interne 18 est repoussé vers l'embout de connexion 30 et entre à nouveau en contact avec celui-ci sous l'effet de la charge du deuxième moyen de rappel 26.

Lorsque la pression est supérieure à la pression seuil et qu'un ordre est envoyé à l'électrovanne d'autoriser l'écoulement entre la source P et la zone A, le solénoïde 40 est alimenté en courant, le noyau mobile 44 se déplace vers l'aval, la bille 12 se décolle du premier siège d'obturateur 14 et vient en contact contre le deuxième siège, d'obturateur 33, l'écoulement entre la source P et la zone A est autorisé et la communication entre la zone A et l'évent est interrompue. Simultanément, l'élément interne 18 s'est déplacé vers l'aval, s'écartant de l'embout de connexion 30, le circuit de détection est ouvert. Le voyant s'éteint (figure 5).

Lorsque la pression est inférieure à la pression seuil et qu'un ordre est envoyé à l'électrovanne d'autoriser l'écoulement entre la source P et la zone A, le solénoïde 40 est alimenté en courant, le noyau mobile 44 se déplace vers l'aval, la bille12 se décolle du premier siège d'obturateur 14 et vient en contact contre le deuxième siège d'obturateur 33, l'écoulement entre la source P et la zone A est autorisé et la communication entre la zone A et l'évent est interrompue. L'élément interne 18 reste immobile par rapport à l'élément externe 16 en appui contre l'embout de connexion 30 sous l'effet de la charge du deuxième moyen de rappel élastique 26. Le circuit de détection reste fermé et le voyant reste allumé.

Le dispositif D2 selon l'invention assure à la fois une fonction d'électrovanne et une fonction de détection de seuil de pression tout en offrant une grande compacité et un fonctionnement fiable.

La détection du seuil de pression peut par exemple servir à commander l'ouverture de l'électrovanne.

Comme pour le premier mode de réalisation, il pourrait être envisagé de ne pas mettre en oeuvre l'embout de connexion 30 et d'avoir un contact mécanique et électrique direct entre l'élément interne et le bloc-moteur, par exemple dans le cas de matériaux dont les contacts répétés ne provoquent pas de détérioration. Cette variante est représentée sur la figure 8.

Comme pour le premier mode de réalisation, l'obturateur peut être formé par un piston ou tout élément adapté.

Dans la description ci-dessus, le franchissement du seuil de pression provoque l'ouverture du circuit de détection. Il pourrait être prévu, à l'inverse, que le circuit soit ouvert pour une pression inférieure à la pression seuil et qu'il se ferme lorsque la pression est égale ou supérieure à la pression seuil. Pour cela, il pourrait par exemple être prévu que le contact avec le bâti se fasse au moyen d'un contact électrique situé au niveau de l'épaulement forme butée et connecté au bâti à travers l'élément externe.

Par ailleurs, dans le cas d'un circuit hydraulique réalisé dans un bloc-moteur, tout le bloc-moteur est conducteur électrique mais il pourrait être envisagé que le bâti dans lequel le circuit hydraulique est réalisé ne comporte qu'une zone conductrice électrique située de sorte à être connectée soit en permanence à l'embout de connexion, soit à la face amont de l'élément interne mobile de manière intermittente.

En outre dans le cas d'un bloc-moteur d'un véhicule automobile on utilise avantageusement la masse électrique du véhicule pour former une partie du circuit de détection, mais il peut être prévu de réaliser un circuit de détection filaire entre le bâti et la source d'alimentation électrique.

Le dispositif selon l'invention permet donc de manière intégrée et fiable de réaliser à la fois un diagnostic du niveau de pression dans le circuit hydraulique et de commander l'écoulement du fluide.

Le fluide peut être de l'huile motrice dans le cas d'un circuit de lubrification de moteur. Le dispositif peut être mis en oeuvre dans le circuit de refroidissement (liquide de refroidissement = 50% éthylène glycol + 50% eau) ou circuit d'eau ou dans le circuit de liquide de frein ou dans le circuit de liquide de réduction catalytique des gaz NOX contenus dans les gaz d'échappement, le liquide étant une solution aqueuse d'urée, par exemple vendue sous la marque Adblue®. Le dispositif selon l'invention peut être également à tout circuit hydraulique dans tout domaine technique dans lequel on souhaite faire une détection de seuil de pression du fluide et une commande de l'écoulement du fluide.

## Revendications

1. Dispositif de commande de l'écoulement d'un fluide à détection de seuil de pression intégré comportant des moyens interrompant et autorisant l'écoulement destinés à être disposés dans un conduit d'un bâti reliant une source de fluide et un zone à alimenter en fluide, ledit bâti comportant au moins une zone conductrice électrique, des moyens interrompant et autorisant l'écoulement comportant un corps portant un premier siège d'obturateur (14), un obturateur (12) destiné à coopérer de manière étanche avec le premier siège d'obturateur (14), un premier moyen élastique de rappel appliquant un effort de rappel sur l'obturateur (12) en direction du premier siège d'obturateur (14), ledit corps comportant un élément interne (18) portant le premier siège d'obturateur (14), **caractérisé en ce que** ledit élément interne (18) est conducteur électrique, ledit corps comportant également un élément externe (16) isolant électrique de sorte à être isolé électriquement d'au moins la zone conductrice, le dispositif comportant également une connexion électrique (34) destinée à être reliée à un système de détection, ledit système de détection formant avec au moins la zone conductrice du bâti et l'élément interne un circuit électrique de détection, l'élément interne (18) étant en contact permanent avec la connexion électrique (34), l'élément intérieur (18) étant apte à coulisser de manière sensiblement étanche dans l'élément externe (16) de sorte que, lorsque la pression du fluide dépasse la pression seuil, le circuit électrique passe d'un état fermé à un état ouvert ou lorsque la pression du fluide dépasse la pression seuil le circuit électrique passe d'un état ouvert à un état fermé.

2. Dispositif de commande selon la revendication 1, dans lequel dans un premier état de fonctionnement pour une pression inférieure à la pression seuil, l'élément intérieur (18) est en contact électrique avec la zone conductrice du bâti et le circuit électrique est fermé et dans un deuxième état de fonctionnement pour une pression supérieure ou égale à la pression seuil, l'élément intérieur (18) n'est pas en contact électrique avec la zone conductrice du bâti et le circuit électrique est ouvert.

3. Dispositif de commande selon la revendication 1 ou 2, comportant un deuxième moyen de rappel élastique (26) de l'élément interne en direction de la zone conductrice du bâti, ledit deuxième moyen de rappel élastique (26) étant conducteur électrique et formant une partie du circuit électrique de détection.

4. Dispositif de commande selon l'une des revendications 1 à 3, comportant un évent et dans lequel l'élément interne (18) comporte un deuxième siège d'obturateur(33) de sorte que, lorsque les moyens interrompant et autorisant l'écoulement autorisent l'écoulement, l'obturateur (12) est en appui sur le deuxième siège d'obturateur (33) et la communication entre la zone à alimenter et l'évent est interrompue.

5. Dispositif de commande selon l'une des revendications 1 à 4, comportant une butée portée par l'élément externe (16), telle qu'elle limite le coulissement de l'élément interne (18) sous l'effet du fluide sous pression.

6. Dispositif de commande selon l'une des revendications 1 à 5, comportant une pièce de connexion intermédiaire (30) conductrice électrique avec lequel l'élément interne (18) est destiné à être en contact électrique et mécanique dans le premier état de fonctionnement, et à ne pas être en contact électrique et mécanique dans le deuxième état de fonctionnement, la pièce de connexion intermédiaire (30) étant destinée à être en contact mécanique et électrique permanent avec au moins la zone conductrice du bâti.

7. Dispositif de commande selon la revendication 6, dans lequel la pièce intermédiaire de connexion (30) comporte une zone conductrice électrique déformable élastiquement (30.1) destinée à être en contact électrique permanent avec la zone conductrice électrique du bâti.

8. Dispositif de commande selon l'une des revendications 1 à 7, dans lequel les moyens interrompant et autorisant l'écoulement sont formés par un clapet, ledit clapet s'ouvrant lorsque la pression du fluide est au moins égale à une pression d'alimentation supérieure à la pression seuil.

9. Dispositif de commande selon l'une des revendications 1 à 7, dans lequel les moyens interrompant et autorisant l'écoulement sont formés par une électrovanne.

10. Dispositif de commande selon la revendication 9, dans lequel l'électrovanne comporte un solénoïde et une boucle conductrice et magnétique, ladite boucle formant une partie du circuit électrique de détection.

11. Dispositif de commande selon les revendications 10, comportant une connexion électrique d'alimentation électrique (37) du solénoïde, ladite connexion électrique (37) étant adjacente à la connexion électrique (34) du circuit de détection.

12. Système hydraulique comportant un bâti dans lequel est réalisé un circuit hydraulique, au moins un dispositif de commande selon l'une des revendications 1 à 11 monté dans le circuit hydraulique, et un système de détection d'un seuil de pression dans le circuit hydraulique, ledit système de détection comportant une alimentation électrique, ladite connexion électrique (34) du dispositif de commande étant reliée au système de détection relié à la zone conductrice du bâti de sorte à former le circuit électrique de détection.

13. Système hydraulique selon la revendication 12, dans lequel le bâti est en matériau conducteur électrique.

14. Véhicule automobile comportant un bloc-moteur et au moins un système selon la revendication 12 ou 13, le bloc moteur formant le bâti.

15. Véhicule automobile selon la revendication 14, dans lequel le bloc moteur est relié à la masse électrique du véhicule automobile.

## Patentansprüche

1. Vorrichtung zur Steuerung des Fließens eines Fluids mit integrierter Druckschwellenwertdetektion, aufweisend eine Einrichtung für ein Unterbrechen und Zulassen des Fließens, die dazu bestimmt ist, in einem Kanal eines Tragelementes angeordnet zu werden, der eine Fluidquelle und eine mit Fluid zu versorgende Zone verbindet, wobei das Tragelement mindestens eine elektrisch leitende Zone aufweist, und Mittel für ein Unterbrechen und Zulassen des Fließens einen Körper, der einen ersten Absperrsitz (14) trägt, ein Absperrelement (12), das in dichter Weise mit dem ersten Absperrsitz (14) zusammenzuarbeitet, und eine erste elastische Rückstellmittel aufweist, die auf das Absperrelement (12) in Richtung des ersten Absperrsitzes (14) eine Rückstellkraft aufbringt, wobei der Körper ein internes Element (18) aufweist, das den ersten Sperrsitz (14) trägt,
**dadurch gekennzeichnet, dass**
das interne Element (18) elektrisch leitend ist, wobei der Körper auch ein elektrisch isolierendes externes Element (16) aufweist, so dass er zumindest gegen die leitende Zone elektrisch isoliert ist, wobei die Vorrichtung auch einen elektrischen Anschluss (34) aufweist, der mit einem Detektionssystem verbunden ist, wobei das Detektionssystem zumindest mit der leitenden Zone des Tragelementes und dem internen Element einen Detektionsstromkreis bildet, wobei das interne Element (18) in permanentem Kontakt mit dem elektrischen Anschluss (34) steht, wobei das interne Element (18) sich in einer im Wesentlichen dichten Weise in dem externen Element (16) verschieben lässt, so dass, wenn der Fluiddruck den Druckschwellenwert übersteigt, der Stromkreis von einem geschlossenen Zustand in einen offenen Zustand wechselt oder, wenn der Fluiddruck den Druckschwellenwert übersteigt, der Stromkreis von einem offenen Zustand in einen geschlossenen Zustand wechselt.

2. Steuerungsvorrichtung nach Anspruch 1, wobei, in einem ersten Funktionszustand bei einem Druck kleiner als der Druckschwellenwert, das innere Element (18) in elektrischem Kontakt mit der leitenden Zone des Tragelementes steht und der Stromkreis geschlossen ist, und in einem zweiten Funktionszustand bei einem Druck größer oder gleich dem Druckschwellenwert, das innere Element (18) nicht in elektrischem Kontakt mit der leitenden Zone des Tragelementes steht und der Stromkreis geöffnet ist.

3. Steuerungsvorrichtung nach Anspruch 1 oder 2, aufweisend eine zweite Mittel (26) zur elastischen Rückstellung des inneren Elementes in Richtung der leitenden Zone des Tragelementes, wobei die zweite elastische Rückstellmittel (26) elektrisch leitend ist und einen Teil des Detektionsstromkreises bildet.

4. Steuerungsvorrichtung nach einem der Ansprüche 1 bis 3, die eine Entlüftung aufweist und bei der das interne Element (18) einen zweiten Absperrsitz (33) aufweist, so dass, wenn die Mittel für ein Unterbrechen und Zulassen des Fließens das Fließen zulässt, das Absperrelement (12) auf dem zweiten Absperrsitz (33) aufliegt und die Verbindung zwischen der zu versorgenden Zone und der Entlüftung unterbrochen ist.

5. Steuerungsvorrichtung nach einem der Ansprüche 1 bis 4, aufweisend einen Anschlag, der durch das externe Element (16) getragen wird, derart, dass er das Verschieben des internen Elementes (18) unter der Einwirkung des unter Druck stehenden Fluides begrenzt.

6. Steuerungsvorrichtung nach einem der Ansprüche 1 bis 5, aufweisend ein elektrisch leitendes Zwischenverbindungsstück (30), mit dem das interne Element (18) im ersten Funktionszustand in elektrischem und mechanischem Kontakt steht und mit dem es im zweiten Funktionszustand nicht in elektrischem und mechanischem Kontakt steht, wobei das Zwischenverbindungsstück (30) zumindest mit der leitenden Zone des Tragelementes in permanentem mechanischen und elektrischen Kontakt steht.

7. Steuerungsvorrichtung nach Anspruch 6, wobei das Zwischenverbindungsstück (30) eine elastisch verformbare elektrisch leitende Zone (30.1) aufweist, die mit der elektrisch leitenden Zone des Tragelementes in permanentem elektrischen Kontakt steht.

8. Steuerungsvorrichtung nach einem der Ansprüche 1 bis 7, wobei die Mittel für ein Unterbrechen und Zulassen des Fließens durch ein Ventil gebildet sind, wobei sich das Ventil öffnet, wenn der Fluiddruck mindestens so groß wie ein den Druckschwellenwert übersteigender Versorgungsdruck ist.

9. Steuerungsvorrichtung nach einem der Ansprüche 1 bis 7, wobei die Mittel für ein Unterbrechen und Zulassen des Fließens durch ein Elektromagnetventil gebildet sind.

10. Steuerungsvorrichtung nach Anspruch 9, wobei das Elektromagnetventil eine Zylinderspule und eine magnetische Leiterschleife aufweist, wobei die Schleife einen Teil des Detektionsstromkreises bildet.

11. Steuerungsvorrichtung nach Anspruch 10, aufweisend einen elektrischen Anschluss für eine Stromversorgung (37) der Zylinderspule, wobei der elektrische Anschluss (37) benachbart zum elektrischen Anschluss (34) des Detektionsstromkreises ist.

12. Hydrauliksystem, aufweisend ein Tragelement, in dem ein hydraulischer Kreislauf realisiert ist, mindestens eine Steuerungsvorrichtung nach einem der Ansprüche 1 bis 11, die in den hydraulischen Kreislauf eingebaut ist, und ein System zur Detektion eines Druckschwellenwertes in dem hydraulischen Kreislauf, wobei das Detektionssystem eine Stromversorgung aufweist, wobei der elektrische Anschluss (34) der Steuervorrichtung mit dem Detektionssystem verbunden ist, das mit der leitenden Zone des Tragelementes verbunden ist, so dass der Detektionsstromkreis gebildet wird.

13. Hydrauliksystem nach Anspruch 12, wobei das Tragelement aus elektrisch leitendem Material besteht.

14. Kraftfahrzeug, aufweisend einen Motorblock und mindestens ein System nach Anspruch 12 oder 13, wobei der Motorblock das Tragelement bildet.

15. Kraftfahrzeug nach Anspruch 14, wobei der Motorblock mit der elektrischen Masse des Kraftfahrzeugs verbunden ist.

## Claims

1. Device for controlling the flow of a fluid with in-built pressure threshold detection comprising flow interrupting and enabling means intended to be arranged in a pipe of a frame connecting a fluid source and an area to supply with fluid, said frame comprising at least one electrically conducting area, the flow interrupting and enabling means comprising a body bearing a first obturator seat (14), an obturator (12) configured to cooperate in a leak tight manner with the first obturator seat (14), a first elastic return means applying a return force on the obturator (12) in the direction of the first obturator seat (14), said body comprising an internal element (18) bearing the first obturator seat (14), **characterized in that** said internal element (18) is electrically conducting, said body also comprising an electrically insulating external element (16) so as to be electrically insulated from at least the conducting area, the device also comprising an electrical connection (34) intended to be connected to a detection system, said detection system forming, with at least the conducting area of the frame and the internal element, an electrical detection circuit, the internal element (18) being in permanent contact with the electrical connection (34), the internal element (18) being capable of sliding in a substantially leak tight manner in the external element (16) such that, when the pressure of the fluid exceeds the threshold pressure, the electric circuit passes from a closed state to an open state or when the pressure of the fluid exceeds the threshold pressure the electric circuit passes from an open state to a closed state.

2. Control device according to claim 1, in which in a first operating state for a pressure below the threshold pressure, the internal element (18) is in electrical contact with the conducting area of the frame and the electric circuit is closed and in a second operating state for a pressure greater than or equal to the threshold pressure, the internal element (18) is not in electrical contact with the conducting area of the frame and the electric circuit is open.

3. Control device according to claim 1 or 2, comprising a second means of elastic return (26) of the internal element in the direction of the conducting area of the frame, said second elastic return means (26) being electrically conducting and forming a part of the electrical detection circuit.

4. Control device according to one of claims 1 to 3, comprising a vent hole and in which the internal element (18) comprises a second obturator seat (33) such that, when the flow interrupting and enabling means allow flow, the obturator (12) bears on the second obturator seat (33) and communication between the area to supply and the vent hole is interrupted.

5. Control device according to one of claims 1 to 4, comprising a stop borne by the external element (16), such that it limits the sliding of the internal element (18) under the effect of the pressurised fluid.

6. Control device according to one of claims 1 to 5, comprising an electrically conducting intermediate connection part (30) with which the internal element (18) is intended to be in electrical and mechanical contact in the first operating state, and not to be in electrical and mechanical contact in the second operating state, the intermediate connection part (30) being intended to be in permanent mechanical and electrical contact with at least the conducting area of the frame.

7. Control device according to claim 6, in which the intermediate connection part (30) comprises an elastically deformable electrically conducting area (30.1) configured to be in permanent electrical contact with the electrically conducting area of the frame.

8. Control device according to one of claims 1 to 7, in which the flow interrupting and enabling means are formed by a valve, said valve opening when the pressure of the fluid is at least equal to a supply pressure greater than the threshold pressure.

9. Control device according to one of claims 1 to 7, in which the flow interrupting and enabling means are formed by an electromagnetic valve.

10. Control device according to claim 9, in which the electromagnetic valve comprises a solenoid and a conducting and magnetic loop, said loop forming a part of the electrical detection circuit.

11. Control device according to claim 10, comprising an electrical connection for electrically supplying (37) the solenoid, said electrical connection (37) being adjacent to the electrical connection (34) of the detection circuit.

12. Hydraulic system comprising a frame in which is formed a hydraulic circuit, at least one control device according to one of claims 1 to 11 mounted in the hydraulic circuit, and a system for detecting a threshold pressure in the hydraulic circuit, said detection system comprising an electrical supply, said electrical connection (34) of the control device being connected to the detection system connected to the conducting area of the frame so as to form the electrical detection circuit.

13. Hydraulic system according to claim 12, in which the frame is made of electrically conducting material.

14. Automobile vehicle comprising an engine block and at least one system according to claim 12 or 13, the engine block forming the frame.

15. Automobile vehicle according to claim 14, in which the engine block is connected to the electrical ground of the automobile vehicle.
